# EUROPÄISCHE PATENTSCHRIFT

(11) **EP 2 740 178 B1**
(45) Veröffentlichungstag und Bekanntmachung des Hinweises auf die Patenterteilung: **23.05.2018**
(21) Anmeldenummer: 12743167.4
(22) Anmeldetag: 02.08.2012
(51) Int. Cl.: H01M 10/052, H01M 10/0525, H01M 10/0567, H01M 14/00

(54) **ELEKTROLYT FÜR LITHIUM-BASIERTE ENERGIESPEICHER**
ELECTROLYTE FOR LITHIUM-BASED ENERGY STORES
ÉLECTROLYTE POUR ACCUMULATEURS D'ÉNERGIE AU LITHIUM

(30) Priorität: 03.08.2011 DE 102011052383
(43) Veröffentlichungstag der Anmeldung: 11.06.2014
(73) Patentinhaber: Westfälische Wilhelms-Universität Münster, 48149 Münster (DE)
(72) Erfinder: KRÄMER, Elisabeth, 68163 Mannheim (DE); SCHMITZ, René, 68163 Mannheim (DE); PASSERINI, Stefano, 48149 Münster (DE); WINTER, Martin, 48149 Münster (DE)
(74) Vertreter: Michalski Hüttermann & Partner Patentanwälte mbB
(86) Internationale Anmeldenummer: PCT/EP2012/065142
(87) Internationale Veröffentlichungsnummer: WO 2013/017658

(56) Entgegenhaltungen:
- EP-A1- 0 948 073
- JP-A- 2009 099 449
- US-A1- 2006 068 283

## Beschreibung

Die Erfindung betrifft einen Elektrolyten insbesondere geeignet für Lithium-basierte Energiespeicher umfassend wenigstens ein Lithiumsalz und ein Lösungsmittel.

Lithium-Ionen-Batterien sind aufgrund ihrer hohen Energie- und Leistungsdichte beliebte Energiespeicher, vor allem für Anwendungen in der portablen Elektronik. Lithium-Ionen-Batterien umfassen zwei Elektroden, die durch einen Separator räumlich voneinander getrennt sind, wobei Lithiumionen reversibel in die Elektroden interkaliert bzw. deinterkaliert werden. Insbesondere wiederaufladbare Lithium-Ionen-Batterien (Sekundärbatterien) oder Lithium-Ionen-Akkumulatoren zeichnen sich durch hohe Energiedichte aus, sind thermisch stabil und unterliegen keinem Memory-Effekt. Herkömmliche Lithium-Ionen-Akkumulatoren verwenden eine Anode aus Kohlenstoff, gewöhnlich Graphit. Die positive Elektrode weist üblicherweise Lithium-Übergangstallverbindungen, insbesondere Lithium-Übergangsmetalloxide auf, beispielsweise Lithiumeisenphosphat (LFP), Lithiumcobaltdioxid, Lithiumnickeldioxid, Lithium-Nickel-Cobalt-Mangan-Oxid oder Lithium-Nickel-Cobalt-Aluminium-Oxid. Der Ladungstransport erfolgt über einen Elektrolyten, wobei der Elektrolyt ein Lithiumsalz, welches in einem Lösungsmittel gelöst ist, umfasst. Im Stand der Technik sind verschiedene Elektrolyte und Leitsalze bekannt. Häufig verwendete Lithium-Leitsalze sind beispielsweise Lithiumhexafluorophosphat (LiPF₆), Lithiumperchlorat (LiClO₄) oder Lithiumboratsalze.

Gute Elektrolyte zeichnen sich durch eine gute Temperaturbeständigkeit und gute SEI (Solid Electrolyte Interphase)-Bildungseigenschaften aus. Die sog. Solid Electrolyte Interphase (Feststoff-Elektrolyt-Grenzphase) bildet sich während des ersten Ladungsvorgangs als Zwischenphase an der Grenzfläche von Elektrolyt und Elektrode aus. Bei Graphit-Anoden kommt es dabei zu einer reduktiven Zersetzung des Elektrolyten und die Reaktionsprodukte der Elektrolytreduktion können einen anhaftenden und elektronisch isolierenden aber Lithiumionen leitenden Film auf der Anode ausbilden. Die Solid Electrolyte Interphase verhindert im Folgenden, dass die Elektrodenmaterialien chemisch mit dem Elektrolyten reagieren und schützt den Elektrolyten vor weiterer reduktiver Zersetzung und die Anode vor Zerstörung durch das Lösungsmittel. Insbesondere bei Verwendung von Graphit-Anoden ist die Ausbildung eines dichten und anhaftenden Films für einen sichern Betrieb der Lithium-Ionen-Batterie notwendig.

Einige Elektrolyte weisen jedoch häufig Nachteile hinsichtlich der Ausbildung der Solid Electrolyte Interphase auf. So bildet beispielsweise Propylencarbonat keine Solid Electrolyte Interphase aus. Ohne Ausbildung einer Solid Electrolyte Interphase wird eine Graphit-Anode durch Cointercalation des Propylencarbonat jedoch zerstört.

US 2006/068283 A1 offenbart eine wasserfreie Lösungsmittelmischung und eine eine solche Mischung enthaltende wasserfreie Elektrolytlösung. EP 0948073 A1 offenbart eine elektrolytische Lösung und eine Vorrichtung zur Generierung elektrischer Energie mit dieser Lösung. JP 2009 099449 A offenbart eine eine Sekundärbatterie enthaltend einen nichtwässrigen flüssigen Elektrolyten sowie eine nicht-wässrige elektrolytische flüssige Zusammensetzung.

Der vorliegenden Erfindung lag daher die Aufgabe zu Grunde, einen Elektrolyten zur Verfügung zu stellen, der mindestens einen der vorgenannten Nachteile des Standes der Technik überwindet. Insbesondere lag der vorliegenden Erfindung die Aufgabe zu Grunde einen Elektrolyten bereit zu stellen, der die Ausbildung einer Solid Electrolyte Interphase unterstützt.

Diese Aufgabe wird gelöst durch einen Elektrolyten umfassend wenigstens ein Lithiumsalz, ein Lösungsmittel und wenigstens eine Verbindung gemäß der allgemeinen Formel (1) wie nachstehend angegeben 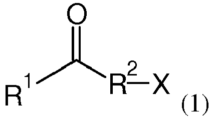 worin:
- X: ist ausgewählt aus der Gruppe umfassend F, Cl, Br und/oder I;
- R¹: ist ausgewählt aus der Gruppe umfassend H, CH₃, CH₂F, CHF₂, CF₃, C₂H₅, C₂H₄F, C₂H₃F₂, C₂H₂F₃ und/oder C₂HF₄;
- R²: ist eine Gruppe -CR³R⁴-, worin:
R³ ist ausgewählt aus der Gruppe umfassend H, CH₃, CH₂F, CHF₂ und/oder CF₃, und
R⁴ ist ausgewählt aus der Gruppe umfassend H, F, CH₃, CH₂F und/oder CHF₂.

Weitere vorteilhafte Ausgestaltungen der Erfindung ergeben sich aus den Unteransprüchen.

Überraschend wurde gefunden, dass eine Verbindung gemäß der allgemeinen Formel (1) in Elektrolyten eine sehr effiziente Ausbildung einer Solid Electrolyte Interphase ermöglicht. Durch eine Verwendung einer Verbindung gemäß der allgemeinen Formel (1) in Elektrolyten kann insbesondere eine Verwendung von Lösungsmitteln, die alleine keine Solid Electrolyte Interphase ausbilden wie Propylencarbonat als Hauptlösungsmittel für Lithium-basierte Energiespeicher ermöglicht werden.

Von besonderem Vorteil ist, dass die Verbindungen gemäß der allgemeinen Formel (1) dazu beitragen können, eine sehr stabile Solid Electrolyte Interphase auszubilden, die über die gesamte Zyklisierdauer Graphitanoden vor einer Exfoliation, einer irreversiblen Zerstörung der Graphitstruktur, schützen kann. Weiter ist von Vorteil, dass die Zersetzung der Verbindungen gemäß der allgemeinen Formel (1) deutlich vor dem Interkalationspotential von Lithium stattfindet, wodurch eine stabile Solid Electrolyte Interphase gebildet werden kann, bevor Lithium interkaliert wird. Dies ermöglicht insbesondere die Herstellung langlebiger wiederaufladbarer Batterien.

In vorteilhafter Weise kann ein erfindungsgemäßer Elektrolyt weiter zu einem niedrigen irreversiblen Kapazitätsverlust bei der Formierung einer Batterie und zu einer hohen Effizienz bei der Zyklisierung im Vergleich zu bekannten Elektrolyten führen.

Ohne auf eine bestimmte Theorie festgelegt zu sein, wird angenommen, dass die Halogenierung insbesondere Fluorierung in alpha-Stellung bezogen auf die Carbonylgruppe wesentlich für die vorteilhaften Eigenschaften der Verbindungen ist.

Unter dem Begriff "C₁₋₆-Aliphat" sind im Sinne der vorliegenden Erfindung aliphatische, acyclische, gesättigte oder ungesättigte, verzweigte oder unverzweigte Kohlenwasserstoffreste mit 1 bis 6 Kohlenstoffatomen zu verstehen. Diese können unsubstituiert oder ein- oder mehrfach substituiert sein.

Die Verbindung gemäß der allgemeinen Formel (1) umfassen vorzugsweise gesättigte Reste R¹ und R². Hierbei sind R¹ und R²X nicht gleichzeitig CF₃, wodurch Perfluoroaceton oder 1,1,1,3,3,3-Hexafluoro-2-propanon gemäß IUPAC-Nomenklatur ausgenommen ist, da Perfluoroaceton zur Ausbildung einer Solid Electrolyte Interphase nicht geeignet ist. Weiterhin ist Perfluoroaceton gasförmig und kann somit nicht als Lösungsmittel zugesetzt werden. Vorzugsweise sind die erfindungsgemäßen Verbindungen keine perhalogenierten oder perfluorierten Verbindungen.

In bevorzugten Ausführungsformen weist die wenigstens eine Verbindung die nachstehende allgemeine Formel (2) auf: 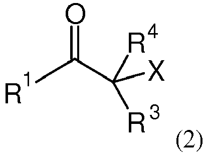 worin:
- X: ist ausgewählt aus der Gruppe umfassend F, Cl, Br und/oder I;
- R¹: ist ausgewählt aus der Gruppe umfassend Wasserstoff, CH₃, CH₂F, CHF₂, CF₃, C₂H₅, C₂H₄F, C₂H₃F₂, C₂H₂F₃ und/oder C₂HF₄;
- R³: ist ausgewählt aus der Gruppe umfassend Wasserstoff, CH₃, CH₂F, CHF₂ und/oder CF₃;
- R⁴: ist ausgewählt aus der Gruppe umfassend H, F, CH₃, CH₂F und/oder CHF₂.

In vorteilhafter Weise kann insbesondere eine Verbindung gemäß der allgemeinen Formel (2) in Elektrolyten eine sehr effiziente Ausbildung einer Solid Electrolyte Interphase ermöglichen. Von besonderem Vorteil ist, dass Verbindungen gemäß der allgemeinen Formel (2) dazu beitragen können, eine sehr stabile Solid Electrolyte Interphase auszubilden, die über die gesamte Zyklisierdauer Graphitanoden vor einer Exfoliation, einer irreversiblen Zerstörung der Graphitstruktur, schützen kann. Weiter ist von Vorteil, dass die Zersetzung der Verbindungen gemäß der allgemeinen Formel (2) deutlich vor dem Interkalationspotential von Lithium stattfindet, wodurch eine stabile Solid Electrolyte Interphase gebildet werden kann, bevor Lithium interkaliert wird. Dies ermöglicht insbesondere die Herstellung langlebiger wiederaufladbarer Batterien.

Der Substituent X ist ein Halogen ausgewählt aus der Gruppe umfassend F, Cl, Br und/oder I. Vorzugsweise ist der Substituent X ein Halogen ausgewählt aus F und/oder Cl. In bevorzugten Ausführungsformen ist X Fluor. In vorteilhafter Weise ist insbesondere eine fluorierte Verbindung gemäß der allgemeinen Formel (2) zur Bildung einer effizienten Solid Electrolyte Interphase verwendbar.

Der Begriff "C₁-C₅-Alkyl" umfasst, wenn nicht anders angegeben, geradkettige oder verzweigte Alkylgruppen mit 1 bis 5 Kohlenstoffatomen. Die Begriffe "C₂-C₅-Alkenyl" und "C₂-C₅-Alkinyl" umfassen , wenn nicht anders angegeben, geradkettige oder verzweigte Alkenyl- bzw. Alkinylgruppen mit 2 bis 5 Kohlenstoffatomen und jeweils mindestens einer Doppel- bzw. Dreifachbindung. Bevorzugt sind acyclische Reste.

Bevorzugt sind C₁-C₄-Alkylgruppen. Bevorzugt C₁-C₄-Alkylgruppen umfassend, wenn nicht anders angegeben, geradkettige oder verzweigte Alkylgruppen mit 1 bis 4 Kohlenstoffatomen, vorzugsweise ausgewählt aus der Gruppe umfassend Methyl, Ethyl, Propyl, Isopropyl, Butyl, Isobutyl, Pentyl, Isopentyl und/oder Neopentyl. Bevorzugte C₂-C₄-Alkenylgruppen sind ausgewählt aus der Gruppe umfassend Ethenyl und/oder Propenyl umfassend -CH₂CH=CH₂, -CH=CH-CH₃ und -C(=CH₂)-CH₃. Bevorzugte C₂-C₄-Alkinylgruppen sind ausgewählt aus der Gruppe umfassend Ethinyl und/oder Propinyl umfassend -CH-C=CH und -C=C-CH₃.

Die Alkyl-, Alkenyl- oder Alkinylgruppen können unsubstituiert sein, oder ein- oder mehrfach, beispielsweise zwei-, drei- oder vierfach, substitutiert sein. Hierbei können die Alkyl-, Alkenyl- oder Alkinylgruppen an verschiedenen wie auch an gleichen Kohlenstoffatomen mehrfach substituiert sein.

Vorzugsweise sind Alkyl-, Alkenyl- und Alkinylgruppen jeweils unsubstituiert oder mit einem oder mehreren gleichen oder verschiedenen Substituenten ausgewählt aus der Gruppe umfassend F, Cl, Br, I und/oder C₁₋₄-Alkyl substituiert. Alkyl-, Alkenyl- und Alkinylgruppen können auch mit Carbonylsauerstoff und/oder C₁₋₄-Alkoxy substituiert sein, jedoch ist eine Substitution ohne Sauerstoff bevorzugt.

Bevorzugt sind Alkyl-, Alkenyl- und Alkinylgruppen jeweils unsubstituiert oder mit einem oder mehreren gleichen oder verschiedenen Substituenten ausgewählt aus der Gruppe umfassend F, Cl und/oder C₁₋₂-Alkyl substituiert. Vorzugsweise sind Alkyl-, Alkenyl- und Alkinylgruppen jeweils unsubstituiert oder mit einem oder mehreren F und/oder Cl substituiert. Hierbei können die Reste R¹, R³ und R⁴ auch mit Chlor substituiert sein, wenn X Fluor ist. Vorzugsweise sind die Reste R¹, R³ und R⁴ jedoch mit Fluor substituiert, oder mit Fluor und Chlor.

Insbesondere fluorierte Verbindungen können eine gute Solid Electrolyte Interphase ausbilden.

Insbesondere bevorzugt steht R¹ für unsubstituiertes oder einfach oder mehrfach, insbesondere zwei-, drei- oder vierfach, mit Fluor substituiertes C₁-C₂-Alkyl. In bevorzugten Ausführungsformen ist R¹ ausgewählt aus der Gruppe umfassend CH₃, CH₂F, CHF₂, CF₃, C₂H₅, C₂H₄F, C₂H₃F₂, C₂H₂F₃ und/oder C₂HF₄, bevorzugt ausgewählt aus der Gruppe umfassend CH₃, CH₂F, CHF₂ und/oder CF₃. In vorteilhafter Weise führen kleine Alkylgruppen zu Verbindungen gemäß der allgemeinen Formel (1) oder (2), die zur effizienten Ausbildung einer Solid Electrolyte Interphase beitragen können.

Vorzugsweise steht R⁴ für Wasserstoff und/oder Fluor. Besonders bevorzugt ist R⁴ ausgewählt aus der Gruppe umfassend CH₃, CH₂F und/oder CHF₂.

Vorzugsweise steht R³ für Wasserstoff. R³ steht nicht für Fluor oder Halogen. Besonders bevorzugt ist R³ ausgewählt aus der Gruppe umfassend CH₃, CH₂F, CHF₂ und/oder CF₃.

In bevorzugten Ausführungsformen ist bei einer Verbindung gemäß der allgemeinen Formel (2) R¹ ausgewählt aus der Gruppe umfassend CH₃, CH₂F, CHF₂, CF₃, C₂H₅, C₂H₄F, C₂H₃F₂, C₂H₂F₃ und/oder C₂HF₄, bevorzugt ausgewählt aus der Gruppe umfassend CH₃, CH₂F, CHF₂ und/oder CF₃, und R⁴ ist ausgewählt aus der Gruppe umfassend Wasserstoff, Fluor, CH₃, CH₂F und/oder CHF₂, und R³ ist ausgewählt aus der Gruppe umfassend Wasserstoff, CH₃, CH₂F, CHF₂ und/oder CF₃.

In bevorzugten Ausführungsformen ist bei einer Verbindung gemäß der allgemeinen Formel (1):
- X: ausgewählt aus der Gruppe umfassend F, Cl, Br und/oder I;
- R¹: ausgewählt aus der Gruppe umfassend CH₃, CH₂F, CHF₂ und/oder CF₃;
- R²: eine Gruppe -CR³R⁴-, worin:
R³ ist ausgewählt aus der Gruppe umfassend H, CH₃, CH₂F, CHF₂ und/oder CF₃, und
R⁴ ist ausgewählt aus der Gruppe umfassend H, F, CH₃, CH₂F und/oder CHF₂.

Es wird angenommen, dass die Halogenierung insbesondere Fluorierung in alpha-Stellung bezogen auf die Carbonylgruppe wesentlich für die vorteilhaften Eigenschaften der Verbindungen ist.

Vorzugsweise ist X Fluor. Insbesondere fluorierte Verbindungen können eine gute Solid Electrolyte Interphase ausbilden. Vorzugsweise ist R¹ ausgewählt aus der Gruppe umfassend CH₃, CH₂F, CHF₂, CF₃, C₂H₅, C₂H₄F, C₂H₃F₂, C₂H₂F₃ und/oder C₂HF₄. Bevorzugt ist R¹ ausgewählt aus der Gruppe umfassend C₂H₅, C₂H₄F, C₂H₃F₂, C₂H₂F₃ und/oder C₂HF₄. Insbesondere bevorzugt ist R¹ ausgewählt aus der Gruppe umfassend CH₃, CH₂F, CHF₂ und/oder CF₃, vorzugsweise aus der Gruppe umfassend CH₃, CH₂F und/oder CHF₂.

Vorzugsweise sind die erfindungsgemäßen Verbindungen keine perhalogenierten oder perfluorierten Verbindungen. Perhalogenierte insbesondere perfluorierte Verbindungen weisen üblicher Weise einen niedrigeren Siedepunkt und höheren Schmelzpunkt auf als weniger stark fluorierte Verbindungen, wodurch letztere besser handhabbar sind. Wenn R¹ und R³ CF₃ sind, ist R⁴ daher vorzugsweise nicht Fluor, oder wenn R³ CF₃ und R⁴ Fluor ist, ist R¹ entsprechend vorzugsweise nicht CF₃. Vorzugsweise ist R³ ausgewählt aus der Gruppe umfassend H, CH₃, CH₂F und/oder CHF₂.

In bevorzugten Ausführungsformen ist bei einer Verbindung gemäß der allgemeinen Formel (1):
- X: F;
- R¹: ausgewählt aus der Gruppe umfassend H, CH₃, CH₂F, CHF₂, CF₃, C₂H₅, C₂H₄F, C₂H₃F₂, C₂H₂F₃ und/oder C₂HF₄, bevorzugt ausgewählt aus der Gruppe umfassend CH₃, CH₂F, CHF₂ und/oder CF₃;
- R²: eine Gruppe -CR³R⁴-, worin:
R³ ist Wasserstoff, und
R⁴ ist ausgewählt aus der Gruppe umfassend H, F, CH₃, CH₂F und/oder CHF₂.

Insbesondere fluorierte Verbindungen können eine gute Solid Electrolyte Interphase ausbilden.

Vorzugsweise ist R¹ ausgewählt aus der Gruppe umfassend CH₃, CH₂F, CHF₂, CF₃, C₂H₅, C₂H₄F, C₂H₃F₂, C₂H₂F₃ und/oder C₂HF₄. Bevorzugt ist R¹ ausgewählt aus der Gruppe umfassend C₂H₅, C₂H₄F, C₂H₃F₂, C₂H₂F₃ und/oder C₂HF₄. Insbesondere bevorzugt ist R¹ ausgewählt aus der Gruppe umfassend CH₃, CH₂F, CHF₂ und/oder CF₃, vorzugsweise aus der Gruppe umfassend CH₃, CH₂F und/oder CHF₂.

In bevorzugten Ausführungsformen ist die Verbindung gemäß der allgemeinen Formel (1) ausgewählt aus der Gruppe umfassend CF₃-C(O)-CHF₂, CF₃-C(O)-CH₂F, CHF₂-C(O)-CHF₂, CF₃-C(O)-CH₃, CH₂F-C(O)-CHF₂, CHF₂-C(O)-CH₃, CH₂F-C(O)-CH₂F und/oder CH₂F-C(O)-CH₃. Vorzugsweise ist die Verbindung gemäß der allgemeinen Formel (1) oder (2) ausgewählt aus CH₂F-C(O)-CH₂F und/oder CH₂F-C(O)-CH₃. Ganz besonders bevorzugt ist die Verbindung gemäß der allgemeinen Formel (1) CH₃-C(O)-CH₂F, Fluor-2-propanon oder Fluoraceton genannt.

In vorteilhafter Weise kann insbesondere ein Elektrolyt umfassend Fluoraceton eine gute Zyklenstabilität und eine hohe Effizienz bei der Bildung einer SEI zeigen. Insbesondere ist eine frühe Zersetzung des Fluoraceton und Ausbildung der SEI von deutlichem Vorteil gegenüber bekannten SEI-Bildnern. Darüber hinaus kann insbesondere ein Elektrolyt umfassend Fluoraceton sehr gute Eigenschaften auch bei hohen Entladeraten zeigen.

Die Verbindungen gemäß der allgemeinen Formel (1) sind kommerziell erhältlich oder nach dem Fachmann geläufigen Standardverfahren herstellbar.

Der erfindungsgemäße Elektrolyt weist neben wenigstens einem Lithiumsalz und wenigstens einer Verbindung gemäß der allgemeinen Formel (1) ein Lösungsmittel auf. Das Lösungsmittel dient vorzugsweise als Lösungsmittel für das Lithiumsalz.

Vorzugsweise ist der Elektrolyt ein vorzugsweise im Wesentlichen wasserfreier, organischer flüssigförmiger oder Flüssigkeitselektrolyt. Vorzugsweise das Lösungsmittel ein aprotisches Lösungsmittel. Geeignete aprotische Lösungsmittel sind beispielsweise ausgewählt aus der Gruppe umfassend cyclische Carbonate vorzugsweise Ethylencarbonat (EC) und/oder Propylencarbonat (PC), lineare Carbonate vorzugsweise Diethylcarbonat (DEC), Dimethylcarbonat (DMC) und/oder Ethylmethylcarbonat (EMC), Nitrile vorzugsweise Acetonitril (AN), Dinitrile vorzugsweise Glutaronitril (GLN), Adiponitril (ADN) und/oder Pimelonitril (PIN), und/oder Lactone vorzugsweise gamma-Butyrolacton (GBL) und/oder gamma-Valerolacton (GVL).

In einer bevorzugten Ausführungsform ist das Lösungsmittel ein aprotisches Lösungsmittel ausgewählt aus der Gruppe umfassend Propylencarbonat, Ethylencarbonat, Diethylcarbonat, Dimethylcarbonat, Ethylmethylcarbonat, Acetonitril, Glutaronitril, Adiponitril, Pimelonitril, gamma-Butyrolacton und/oder gamma-Valerolacton.

Ein besonders bevorzugtes aprotisches Lösungsmittel ist Propylencarbonat. Propylencarbonat wird gemäß der IUPAC-Nomenklatur auch 4-Methyl-1,3-dioxol-2-on benannt. Propylencarbonat ist kommerziell erhältlich und kann beispielsweise als Nebenprodukt bei der Synthese von Polypropylencarbonat aus Propylenoxid und Kohlendioxid gewonnen werden. In vorteilhafter Weise weist Propylencarbonat einen hohen Siedepunkt, einen hohen Flammpunkt und einen niedrigen Schmelzpunkt auf. Weiter vorteilhaft ist, dass Propylencarbonat eine hohe Leitfähigkeit und eine gute Salzdissoziation ermöglicht.

In vorteilhafter Weise kann unter Verwendung einer Verbindungen der allgemeinen Formel (1) ein Elektrolyt umfassend Propylencarbonat als Lösungsmittel eine vergleichbare Reversibilität, eine vergleichbare Langzeitstabilität und eine ebenso effiziente SEI-Bildung aufweisen, wie bekannte Elektrolyte, die ohne Beimischung weiterer Verbindungen eine Solid Electrolyte Interphase ausbilden können. Eine solche vergleichbare Reversibilität, vergleichbare Langzeitstabilität und effiziente SEI-Bildung kann nicht mit Elektrolyten umfassend Propylencarbonat erreicht werden, die nicht eine Verbindungen gemäß der allgemeinen Formel (1) aufweisen.

Ferner führt eine Verwendung von Propylencarbonat im Vergleich zu üblichen aprotischen Elektrolyten durch einen höheren Siedepunkt und niedrigeren Schmelzpunkt zu einer erhöhten thermischen Stabilität und damit zu einer gesteigerten Leistungsfähigkeit von Batterien und Akkumulatoren umfassend den erfindungsgemäßen Elektrolyten. Weiterhin wird das Sicherheitsrisiko gesenkt, da die Entzündlichkeit von Elektrolyten umfassend Propylencarbonat geringer ist als die üblicher Elektrolyte. Weiterhin ist Propylencarbonat leicht handhabbar, da Propylencarbonat bei Raumtemperatur flüssig ist.

Ein weiteres bevorzugtes aprotisches Lösungsmittel ist Ethylencarbonat. Ethylencarbonat wird gemäß der IUPAC-Nomenklatur auch 1,3-Dioxolan-2-on benannt. Ethylencarbonat ist kommerziell erhältlich. In vorteilhafter Weise weist Ethylencarbonat einen hohen Siedepunkt und einen hohen Flammpunkt auf. Weiter vorteilhaft ist, dass auch Ethylencarbonat eine hohe Leitfähigkeit und eine gute Salzdissoziation ermöglicht.

Alternativ kann der Elektrolyt ein Gel-Polymer-Elektrolyt und/oder Hybrid-Elektrolyt sein. In einer weiter bevorzugten Ausführungsform ist das Lösungsmittel ein Polymerelektrolyt insbesondere ausgewählt aus der Gruppe umfassend Polyethylenoxid, Polyacrylnitril und/oder Polymethylmethacrylat.

Ebenfalls kann der Elektrolyt eine ionische Flüssigkeit sein. In einer weiter bevorzugten Ausführungsform ist das Lösungsmittel eine ionische Flüssigkeit ausgewählt aus der Gruppe umfassend Bis(trifluoromethansulfonyl)imid (EMI-TFSI), N-butyl-N-methylpyrrolidiniumbis (trifluoromethansulfonyl)imid (PYR14TFSI) und/oder N-methyl-N-propylpyrrolidinium-bis(trifluoromethansulfonyl imid (PYR13TFSI).

Der erfindungsgemäße Elektrolyt weist neben einem Lösungsmittel und wenigstens einer Verbindung gemäß der allgemeinen Formel (1) wenigstens ein Lithiumsalz auf. Das Lithiumsalz dient vorzugsweise als Leitsalz.

Geeignete Lithiumsalze sind beispielsweise ausgewählt ist aus der Gruppe umfassend LiAlCl₄, LiClO₄, LiBF₄, LiPF₆, LiCl, LiGaCl₄, LiSCN, LiAlO₄, Lil, LiN(CF₃SO₂)₂, LiCF₃CF₂SO₃, LiCF₃SO₃, LiB(C₆H₅)₄, LiC₆F₅SO₃, LiCF₃SO₃, LiSO₃F und/oder LiO₂CCF₃. Bevorzugte Lithiumsalze sind ausgewählt ist aus der Gruppe umfassend LiAsF₆, LiClO₄, LiSbF₆, LiPtCl₆, Li(CF₃)SO₃ (LiTf), LiC(SO₂CF₃)₃, phosphatbasierten Lithiumsalzen, vorzugsweise LiPF₆, LiPF₃(CF₃)₃ (LiFAP) und LiPF₄(C₂O₄) (LiTFOB), boratbasierten Lithiumsalzen, vorzugsweise LiBF₄, LiB(C₂O₄)₂ (LiBOB), LiBF₂(C₂O₄) (LiDFOB), LiB(C₂O₄)(C₃O₄) (LiMOB), Li(C₂F₅BF₃) (LiFAB) und Li₂B₁₂F₁₂ (LiDFB),L und Lithium-Salze von Sulfonylimiden, vorzugsweise LiN(SO₂CF₃)₂ (LiTFSI) und LiN(SO₂C₂F₅)₂ (LiBETI).

In weiter bevorzugten Ausführungsformen ist das Lithiumsalz ausgewählt aus der Gruppe umfassend LiPF₆, LiBF₄, LiAsF₆, LiSbF₆, LiClO₄, LiPtCl₆, LiN(SO₂CF₃)₂, LiC(SO₂CF₃)₃ und LiSO₃CF₃, Lithiumboratsalze vorzugsweise ausgewählt aus Lithium-bisoxalatoborat, Lithium-difluorooxalatoborat Lithium-difluorooxalatoborat, Lithiumdifluoromalonatoborat, Lithium-difluoroglykolatoborat, Lithium-difluorosalicylatoborat, Lithium-difluorolactatoborat und/oder Lithium-difluoro-brenzcatechinatoborat, Lithium-Salze von Sulfonylimiden vorzugsweise von Bis(trifluormethansulfonyl)imid und Bis(pentafluor-ethansulfonyl)imid, und/oder Lithium-tetrafluoro(oxalato)phosphat. Besonders bevorzugt ist das Lithiumsalz LiPF₆.

Vorzugsweise liegt das Lithiumsalz in dem Lösungsmittel gelöst vor. Vorzugsweise liegt die Konzentration des Lithiumsalzes im Elektrolyten, vorzugsweise in einem Gemisch ausgebildet aus dem Lösungsmittel und der Verbindung gemäß der Formel (1), im Bereich von ≥ 0,5 M bis ≤ 2,5 M, vorzugsweise im Bereich von ≥ 0,65 M bis ≤ 2 M, besonders bevorzugt im Bereich von ≥ 1 M bis ≤ 1,5 M. In vorteilhafter Weise führt eine solche Konzentration des Lithiumsalzes zu einem Elektrolyten mit guter Leitfähigkeit.

In bevorzugten Ausführungsformen enthält ein Gemisch des Lösungsmittels und der wenigstens einen Verbindung gemäß der allgemeinen Formel (1) im Bereich von ≥ 0,1 Gew.-% bis ≤ 15 Gew.-%, vorzugsweise im Bereich von ≥ 1,5 Gew.-% bis ≤ 7 Gew.-%, bevorzugt im Bereich von ≥ 1 Gew.-% bis ≤ 5 Gew.-%, bezogen auf das Gesamtgewicht des Gemischs, der wenigstens einen Verbindung gemäß der allgemeinen Formel (1).

In vorteilhafter Weise kann ein Elektrolyt umfassend ≥ 0,1 Gew.-% bis ≤ 15 Gew.-% einer Verbindung gemäß der allgemeinen Formel (1), insbesondere Fluoraceton, eine sehr gute Bildung einer Solid Electrolyte Interphase zeigen. Darüber hinaus kann ein Elektrolyt umfassend ≥ 0,1 Gew.-% bis ≤ 15 Gew.-% einer Verbindung gemäß der allgemeinen Formel (1), insbesondere Fluoraceton, eine hohe Leitfähigkeit und eine gute Salzdissoziation zeigen. Insbesondere in einem Bereich von ≥ 1 Gew.-% bis ≤ 5 Gew.-% sind sehr gute Werte für Leitfähigkeit und Salzdissoziation möglich.

Es kann bevorzugt sein, dass der Elektrolyt, abgesehen von einem Lithiumsalz, einem Lösungsmittel, vorzugsweise Propylencarbonat, und einer Verbindung gemäß der allgemeinen Formel (1), kein weiteres aprotisches Lösungsmittel aufweist, insbesondere keine üblicherweise eingesetzten Alkylencarbonate wie Ethylencarbonat, Dimethylcarbonat oder Diethylcarbonat.

In einer bevorzugten Ausführungsform umfasst der Elektrolyt Fluoraceton, wenigstens ein Lithiumsalz, vorzugsweise LiPF₆, und Propylencarbonat als Lösungsmittel. Der Elektrolyt ist beispielsweise herstellbar durch Einbringen des Lithiumsalzes in eine Mischung des Lösungsmittels und der wenigstens einen Verbindung gemäß der allgemeinen Formel (1). Alternativ kann das Lithiumsalz zunächst mit dem Lösungsmittel gemischt werden und dann die Verbindung gemäß der allgemeinen Formel (1) hinzugegeben werden.

Es kann auch bevorzugt sein, dass der Elektrolyt weiterhin wenigstens ein Additiv insbesondere ausgewählt aus der Gruppe umfassend SEI-Bildner, Flammschutzmittel und Überladeschutzadditive aufweist. Vorzugsweise enthält der Elektrolyt eine Verbindung ausgewählt aus der Gruppe umfassend Vinylcarbonat, Fluorethylencarbonat und/oder Ethylensulfat.

Geeignete SEI-Bildner sind beispielsweise ausgewählt aus der Gruppe umfassend Chlorethylencarbonat, Fluorethylencarbonat, Vinylencarbonat (VC), Vinylethylencarbonat (VEC), Ethylensulfit (ES), Ethylensulfat, Propansulfonate, Sulfite, vorzugsweise Dimethylsulfit und Propylensulfit, Sulfate, optional mit F, Cl oder Br substituierte Butyrolactone, Phenylethylencarbonat, Vinylacetat und/oder Trifluorpropylencarbonat. Bevorzugte SEI-Bildner sind ausgewählt aus der Gruppe umfassend Chlorethylencarbonat, Fluorethylencarbonat, Ethylensulfit (ES), Ethylensulfat, Propansulfonate, Sulfite, vorzugsweise Dimethylsulfit und Propylensulfit, Sulfate, optional mit F, Cl oder Br substituierte Butyrolactone, Vinylacetat und Trifluorpropylencarbonat. Besonders bevorzugte SEI-Bildner sind ausgewählt aus der Gruppe umfassend Vinylcarbonat, Fluorethylencarbonat und/oder Ethylensulfat.

In weiteren Ausführungsformen enthält ein Gemisch des Lösungsmittels und der wenigstens einen Verbindung gemäß der allgemeinen Formel (1) weiterhin wenigstens ein Additiv, vorzugsweise eine Verbindung ausgewählt aus der Gruppe umfassend Vinylcarbonat, Fluorethylencarbonat und/oder Ethylensulfat. Vorzugsweise enthält ein Gemisch des Lösungsmittels und der wenigstens einen Verbindung gemäß der allgemeinen Formel (1) ein Additiv im Bereich von ≥ 0,1 Gew.-% bis ≤ 10 Gew.-%, bevorzugt im Bereich von ≥ 1,5 Gew.-% bis ≤ 7 Gew.-%, vorzugsweise im Bereich von ≥ 1 Gew.-% bis ≤ 5 Gew.-%, bezogen auf das Gesamtgewicht des Gemischs.

Vorzugsweise liegt der Gehalt des Elektrolyten an der wenigstens einen Verbindung gemäß der allgemeinen Formel (1) und weiterer Additive, vorzugsweise Verbindungen ausgewählt aus der Gruppe umfassend Vinylcarbonat, Fluorethylencarbonat und/oder Ethylensulfat, insgesamt im Bereich von ≥ 0,1 Gew.-% bis ≤ 15 Gew.-%, vorzugsweise im Bereich von ≥ 1,5 Gew.-% bis ≤ 7 Gew.-%, bevorzugt im Bereich von ≥ 1 Gew.-% bis ≤ 5 Gew.-%, bezogen auf das Gesamtgewicht des Gemischs aus Lösungsmittel, der wenigstens einen Verbindung gemäß der allgemeinen Formel (1) und Additiv.

Der Elektrolyt umfassend ein Lithiumsalz, ein Lösungsmittel und wenigstens eine Verbindung gemäß der allgemeinen Formel (1) ist vorzugsweise eine flüssige Zusammensetzung. Eine flüssige Zusammensetzung kann eine Lösung oder eine Dispersion sein, beispielsweise eine Emulsion oder eine Suspension. Vorzugsweise liegt der Elektrolyt als eine flüssige Zusammensetzung, besonders bevorzugt in Form einer Lösung, insbesondere als Elektrolytlösung vor. Liegt der Elektrolyt als eine flüssige Zusammensetzung, bevorzugt als eine Lösung vor, so ist diese vorzugsweise im Wesentlichen wasserfrei, insbesondere zu wenigstens 99 Gew.-% wasserfrei, vorzugsweise zu wenigstens 99,5 Gew.-% wasserfrei, besonders bevorzugt zu wenigstens 99,9 Gew.-% wasserfrei, insbesondere zu wenigstens 99,99 Gew.-% wasserfrei, jeweils bezogen auf das Gesamtgewicht des Elektrolyten.

Insbesondere bevorzugt beträgt der Gehalt an Wasser im Elektrolyten höchstens 30 ppm, vorzugsweise höchstens 20 ppm.

Der Elektrolyt eignet sich insbesondere für eine Batterie oder einen Akkumulator, insbesondere als Elektrolyt für eine Lithium-Ionen-Batterie oder einen Lithium-Ionen-Akkumulator. Insbesondere eignet sich der Elektrolyt zur Verwendung in einem Lithium-basierten Energiespeicher, vorzugsweise ausgewählt aus der Gruppe umfassend Lithium-Batterien, Lithium-Ionen-Batterien, Lithium-Ionen-Akkumulatoren, Lithium-Polymer-Batterien und/oder Lithium-Ionen-Kondensatoren. Weiter eignet sich der Elektrolyt zur Verwendung in Lithium-basierten Energiespeichern, die als Weiterentwicklungen der Lithium-Ionen-Akkumulatoren bezeichnet werden, vorzugsweise ausgewählt aus der Gruppe umfassend Lithium-Titanat-Akkumulatoren, Lithium-Luft-Akkumulatoren, Lithium-Mangan-Akkumulatoren, Lithium-Eisen-Phosphat-Akkumulatoren, Lithium-Eisen-Mangan-Phosphat-Akkumulatoren, Lithium-Eisen-Yttrium-Phosphat-Akkumulatoren, Lithium-Schwefel-Akkumulator, Lithium-Nickel-Cobalt-Mangan-Oxid-Akkumulator, Lithium-Nickel-Cobalt-Aluminium-Oxid-Akkumulator und Zinn-Schwefel-Lithium-Akkumulatoren.

Ein weiterer Gegenstand der Erfindung betrifft einen Lithium-basierten Energiespeicher, vorzugsweise eine Lithium-Batterie, Lithium-Ionen-Batterie, Lithium-Ionen-Akkumulator, Lithium-Polymer-Batterie oder Lithium-Ionen-Kondensator, umfassend einen erfindungsgemäßen Elektrolyten.

Die Lithium-basierten Energiespeicher eignen sich für alle Anwendungsgebiete, insbesondere für Elektrofahrzeuge einschließlich Elektrohybridfahrzeuge, wie Autos, Roller oder Fahrräder, elektrische Werkzeuge beispielsweise Elektrobohrmaschinen oder Puffer-Akkumulatoren für die unterbrechungsfreie Stromversorgung.

Ein weiterer Gegenstand der Erfindung betrifft ein Fahrzeug oder Gerät aufweisend wenigstens einen Lithium-basierten Energiespeicher umfassend einen erfindungsgemäßen Elektrolyten.

Ein weiterer Gegenstand der Erfindung betrifft die Verwendung einer Verbindung gemäß der allgemeinen Formel (1) wie nachstehend angegeben 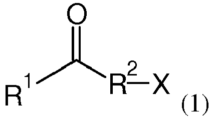 worin:
- X: ist ausgewählt aus der Gruppe umfassend F, Cl, Br und/oder I;
- R¹: ist ausgewählt aus der Gruppe umfassend H, CH₃, CH₂F, CHF₂, CF₃, C₂H₅, C₂H₄F, C₂H₃F₂, C₂H₂F₃ und/oder C₂HF₄;
- R²: ist eine Gruppe -CR³R⁴-, worin:
R³ ist ausgewählt aus der Gruppe umfassend H, CH₃, CH₂F, CHF₂ und/oder CF₃, und
R⁴ ist ausgewählt aus der Gruppe umfassend H, F, CH₃, CH₂F und/oder CHF₂,
in Elektrolyten für primäre und sekundäre elektrochemische Lithium-basierte Energiespeicher, vorzugsweise ausgewählt aus der Gruppe umfassend Lithium-Batterien, Lithium-Ionen-Batterien, Lithium-Ionen-Akkumulatoren, Lithium-Polymer-Batterien und/oder Lithium-Ionen-Kondensatoren, insbesondere in einer Lithium-Ionen Batterie oder in einem Lithium-Ionen Akkumulator.

Bevorzugt ist eine Verwendung einer Verbindung gemäß der allgemeinen Formel (2) wie oben angegeben.

In bevorzugten Ausführungsformen wird eine Verbindung gemäß der allgemeinen Formel (1) verwendet, worin:
- X: ist ausgewählt aus der Gruppe umfassend F, Cl, Br und/oder I;
- R¹: ist ausgewählt aus der Gruppe umfassend CH₃, CH₂F, CHF₂ und/oder CF₃;
- R²: ist eine Gruppe -CR³R⁴-, worin:
R³ ist ausgewählt aus der Gruppe umfassend H, CH₃, CH₂F, CHF₂ und/oder CF₃, und
R⁴ ist ausgewählt aus der Gruppe umfassend H, F, CH₃, CH₂F und/oder CHF₂.

Vorzugsweise ist X Fluor. Vorzugsweise ist R¹ ausgewählt aus der Gruppe umfassend CH₃, CH₂F, CHF₂, CF₃, C₂H₅, C₂H₄F, C₂H₃F₂, C₂H₂F₃ und/oder C₂HF₄. Bevorzugt ist R¹ ausgewählt aus der Gruppe umfassend C₂H₅, C₂H₄F, C₂H₃F₂, C₂H₂F₃ und/oder C₂HF₄. Insbesondere bevorzugt ist R¹ ausgewählt aus der Gruppe umfassend CH₃, CH₂F, CHF₂ und/oder CF₃, vorzugsweise aus der Gruppe umfassend CH₃, CH₂F und/oder CHF₂.

Vorzugsweise werden keine perhalogenierten oder perfluorierten Verbindungen verwendet. Wenn R¹ und R³ CF₃ sind, ist R⁴ daher vorzugsweise nicht Fluor, oder wenn R³ CF₃ und R⁴ Fluor ist, ist R¹ entsprechend vorzugsweise nicht CF₃. Vorzugsweise ist R³ ausgewählt aus der Gruppe umfassend H, CH₃, CH₂F und/oder CHF₂.

In bevorzugten Ausführungsformen wird eine Verbindung gemäß der allgemeinen Formel (1) verwendet, worin:
- X: ist F;
- R¹: ist ausgewählt aus der Gruppe umfassend H, CH₃, CH₂F, CHF₂, CF₃, C₂H₅, C₂H₄F, C₂H₃F₂, C₂H₂F₃ und/oder C₂HF₄, bevorzugt ausgewählt aus der Gruppe umfassend CH₃, CH₂F, CHF₂ und/oder CF₃;
- R²: ist eine Gruppe -CR³R⁴-, worin:
R³ ist Wasserstoff, und
R⁴ ist ausgewählt aus der Gruppe umfassend H, F, CH₃, CH₂F und/oder CHF₂.

Vorzugsweise ist R¹ ausgewählt aus der Gruppe umfassend CH₃, CH₂F, CHF₂, CF₃, C₂H₅, C₂H₄F, C₂H₃F₂, C₂H₂F₃ und/oder C₂HF₄. Bevorzugt ist R¹ ausgewählt aus der Gruppe umfassend C₂H₅, C₂H₄F, C₂H₃F₂, C₂H₂F₃ und/oder C₂HF₄. Insbesondere bevorzugt ist R¹ ausgewählt aus der Gruppe umfassend CH₃, CH₂F, CHF₂ und/oder CF₃, vorzugsweise aus der Gruppe umfassend CH₃, CH₂F und/oder CHF₂.

In bevorzugten Ausführungsformen wird eine Verbindung gemäß der allgemeinen Formel (1) ausgewählt aus der Gruppe umfassend CF₃-C(O)-CHF₂, CF₃-C(O)-CH₂F, CHF₂-C(O)-CHF₂, CF₃-C(O)-CH₃, CH₂F-C(O)-CHF₂, CHF₂-C(O)-CH₃, CH₂F-C(O)-CH₂F und/oder CH₂F-C(O)-CH₃ verwendet. Vorzugsweise ist die Verbindung gemäß der allgemeinen Formel (1) oder (2) ausgewählt aus CH₂F-C(O)-CH₂F und/oder CH₂F-C(O)-CH₃. Ganz besonders bevorzugt ist die Verbindung gemäß der allgemeinen Formel (1) CH₃-C(O)-CH₂F, Fluor-2-propanon oder Fluoraceton genannt.

Ein weiterer Gegenstand der Erfindung betrifft die Verwendung eines erfindungsgemäßen Elektrolyten in primären und sekundären elektrochemischen Lithium-basierten Energiespeichern, vorzugsweise ausgewählt aus der Gruppe umfassend Lithium-Batterien, Lithium-Ionen-Batterien, Lithium-Ionen-Akkumulatoren, Lithium-Polymer-Batterien und/oder Lithium-Ionen-Kondensatoren, insbesondere in einer Lithium-Ionen Batterie oder in einem Lithium-Ionen Akkumulator.

Beispiele und Figuren, die der Veranschaulichung der vorliegenden Erfindung dienen, sind nachstehend angegeben.

Hierbei zeigen die Figuren:

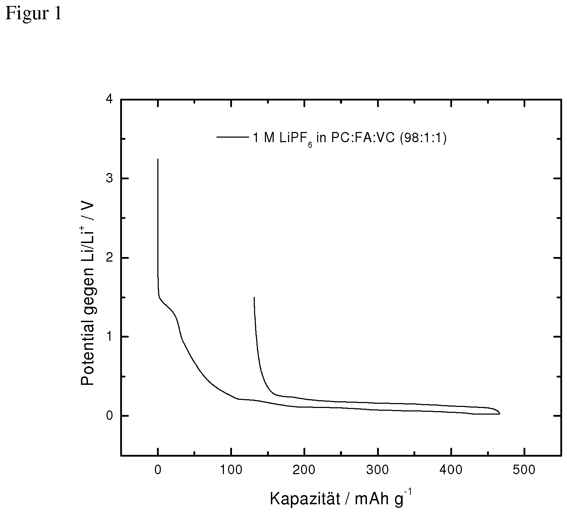

- Figur 1: zeigt den ersten Zyklus einer Graphit-Anode bei Verwendung von 1 M LiPF₆ in der erfindungsgemäßen Elektrolytlösung B2 enthaltend Propylencarbonat (PC), 1 Gew.-% Fluoraceton (FA) und 1 Gew.-% Vinylcarbonat (VC). Aufgetragen ist das Potential gegen die spezifische Kapazität.

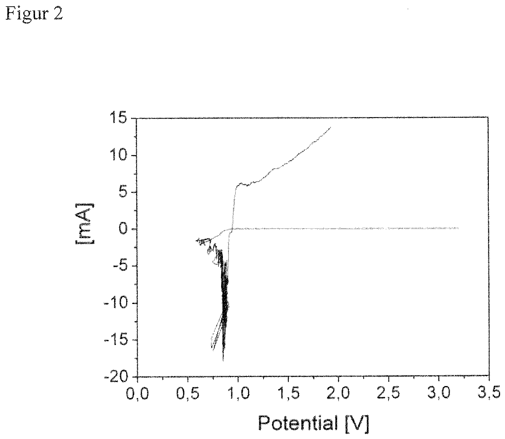

- Figur 2: zeigt ein Voltamogramm der Verwendung von 1 M LiPF₆ in Propylencarbonat als Elektrolyt. Aufgetragen ist die Stromstärke gegen das Potential.

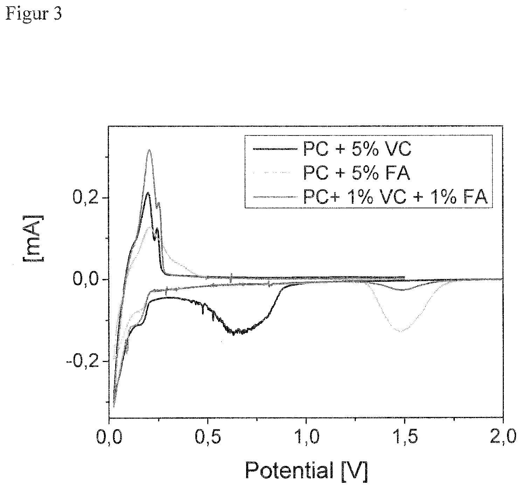

- Figur 3: zeigt ein Zyklovoltamogramm der Verwendung von 1 M LiPF₆ in den erfindungsgemäßen Elektrolytlösungen A2 enthaltend Propylencarbonat (PC) und 5 Gew.-% Fluoraceton (FA) und B2 enthaltend Propylencarbonat (PC), 1 Gew.-% Fluoraceton (FA) und 1 Gew.-% Vinylcarbonat (VC) und dem Vergleichselektrolyten V2 enthaltend Propylencarbonat (PC) und 5 Gew.-% Vinylcarbonat (VC). Aufgetragen ist die Stromstärke gegen das Potential.

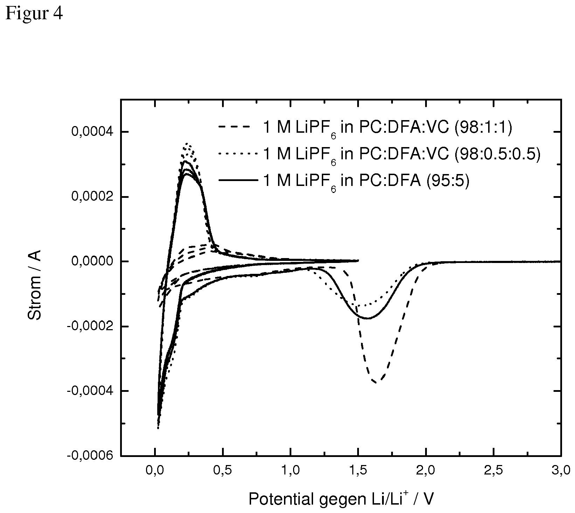

- Figur 4: zeigt ein Zyklovoltamogramm der Verwendung von 1 M LiPF₆ in den erfindungsgemäßen Elektrolytlösungen C1 enthaltend Propylencarbonat (PC), 1 Gew.-% 1,3-Difluoraceton (DFA) und 1 Gew.-% Vinylcarbonat (VC), C2 enthaltend Propylencarbonat (PC), 1 Gew.-% 1,3-Difluoraceton (DFA) und 1 Gew.-% Vinylcarbonat (VC) und C3 enthaltend Propylencarbonat (PC) und 5 Gew.-% 1,3-Difluoraceton (DFA). Aufgetragen ist die Stromstärke gegen das Potential.

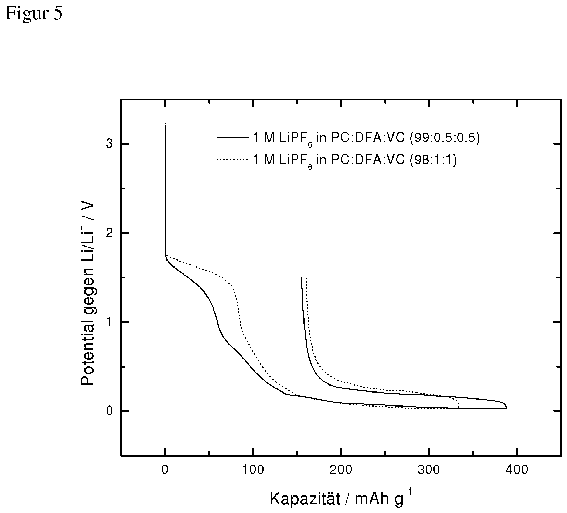

- Figur 5: zeigt den ersten Zyklus einer Graphit-Anode bei Verwendung von 1 M LiPF₆ in den erfindungsgemäßen Elektrolytlösungen C1 enthaltend Propylencarbonat (PC), 1 Gew.-% 1,3-Difluoraceton (DFA) und 1 Gew.-% Vinylcarbonat (VC), C2 enthaltend Propylencarbonat (PC) und 0,5 Gew.-% 1,3-Difluoraceton (DFA) und 0,5 Gew.-% Vinylcarbonat (VC). Aufgetragen ist das Potential gegen die spezifische Kapazität.

### Beispiel 1

### Bestimmung der Leitfähigkeit

### Verwendete Elektrolytlösungen:

### Erfindungsgemäßer Elektrolyt A1

Ein Gemisch aus 95 Gew.-% Propylencarbonat (UBE, Batteriegrad/batterygrade) und 5 Gew.-% Fluoraceton (ABCR, 99 %) wurde vorgelegt. In diesem Gemisch wurden 287 g/l LiN(SO₂CF₃)₂ (LiTFSI) (3M, Batteriegrad) gelöst, so dass sich eine Konzentration von 1 M des Lithiumsalzes ergab.

### Erfindungsgemäßer Elektrolyt B1

Ein Gemisch aus 98 Gew.-% Propylencarbonat (UBE, Batteriegrad), 1 Gew.-% Fluoraceton (ABCR, 99 %) und 1 Gew.-% Vinylcarbonat (UBE, Batteriegrad) wurde vorgelegt. In diesem Gemisch wurden 287 g/l LiN(SO₂CF₃)2 (LiTFSI) (3M, Batteriegrad) gelöst, so dass sich eine Konzentration von 1 M des Lithiumsalzes ergab.

### Vergleichselektrolyt V1

Ein Gemisch aus 95 Gew.-% Propylencarbonat (UBE, Batteriegrad) und 5 Gew.-% Vinylcarbonat (UBE, Batteriegrad) wurde vorgelegt. In diesem Gemisch wurden 287g/l LiN(SO₂CF₃)₂ (LiTFSI) (3M, Batteriegrad) gelöst, so dass sich eine Konzentration von 1 M des Lithiumsalzes ergab.

### Erfindungsgemäßer Elektrolyt A2

Ein Gemisch aus 95 Gew.-% Propylencarbonat (UBE, Batteriegrad) und 5 Gew.-% Fluoraceton (ABCR, 99%) wurde vorgelegt. In diesem Gemisch wurden 152 g/l LiPF₆ (Sigma, 99,995%) gelöst, so dass sich eine Konzentration von 1 M des Lithiumsalzes ergab.

### Erfindungsgemäßer Elektrolyt B2

Ein Gemisch aus 98 Gew.-% Propylencarbonat (UBE, Batteriegrad), 1 Gew.-% Fluoraceton (ABCR, 99%) und 1 Gew.-% Vinylcarbonat (UBE, Batteriegrad) wurde vorgelegt. In diesem Gemisch wurden 152 g/l LiPF₆ (Sigma, 99,995 %) gelöst, so dass sich eine Konzentration von 1 M des Lithiumsalzes ergab.

### Vergleichselektrolyt V2

Ein Gemisch aus 95 Gew.-% Propylencarbonat (UBE, Batteriegrad) und 5 Gew.-% Vinylcarbonat (UBE, Batteriegrad) wurde vorgelegt. In diesem Gemisch wurden 152 g/l LiPF₆ (Sigma, 99,995 %) gelöst, so dass sich eine Konzentration von 1 M des Lithiumsalzes ergab.

Die Leitfähigkeit der erfindungsgemäßen Elektrolyte und des Vergleichselektrolyten wurde unter Verwendung einer selbst-entwickelten Leitfähigkeitsmesszelle bestimmt. Es handelte sich hierbei um einen Polypropylen-Grundkörper in den zwei Edelstahlelektroden eingearbeitet waren. Der Durchmesser betrug 4 mm. Die Zellkonstante wurde mittels KCl Standardlösung ermittelt. Die Messungen wurden in einem auf 25°C temperierten Ofen (Binder) durchgeführt. Als Leitsalz wurde 1 M LiN(SO₂CF₃)₂ (LiTFSI) verwendet.

Die Leitfähigkeit des Lösungsmittels Propylencarbonat mit 1 M LiTFSI wurde zu 4,8 mS/cm bestimmt. Die Leitfähigkeit der erfindungsgemäßen Elektrolyte A1 enthaltend 5 Gew.-% Fluoraceton und B1 enthaltend 1 Gew.-% Fluoraceton und 1 Gew.-% Vinylcarbonat betrug 4,9 mS/cm, die des Vergleichselektrolyten V1 betrug 5,0 mS/cm.

Die Leitfähigkeit des Lösungsmittels Propylencarbonat mit 1 M LiPF₆ wurde zu 6,0 mS/cm bestimmt. Die Leitfähigkeit des erfindungsgemäßen Elektrolyten A2 enthaltend 5 Gew.-% Fluoraceton betrug 6,6 mS/cm. Die Leitfähigkeit des Elektrolyten B2 enthaltend 1 Gew.-% Fluoraceton und 1 Gew.-% Vinylcarbonat betrug 6,0 mS/cm, die des Vergleichselektrolyten V2 betrug 6,3 mS/cm.

Dies zeigt, dass sich die erfindungsgemäßen Elektrolyte durch eine sehr gute Leitfähigkeit bei 25°C auszeichnen. Weiter bewirkt der Zusatz von Fluoraceton eine leichte Erhöhung der Leitfähigkeit im Vergleich zum reinen Lösungsmittel.

### Beispiel 2

### Bestimmung der Kapazität

### Verwendete Elektrolytlösungen:

### Erfindungsgemäßer Elektrolyt A2

Ein Gemisch aus 95 Gew.-% Propylencarbonat (UBE, Batteriegrad) und 5 Gew.-% Fluoraceton (ABCR, 99 %) wurde vorgelegt. In diesem Gemisch wurden 152 g/l LiPF₆ (Sigma, 99,995 %) gelöst, so dass sich eine Konzentration von 1 M des Lithiumsalzes ergab.

### Erfindungsgemäßer Elektrolyt B2

Ein Gemisch aus 98 Gew.-% Propylencarbonat (UBE, Batteriegrad), 1 Gew.-% Fluoraceton (ABCR, 99 %) und 1 Gew.-% Vinylcarbonat (UBE, Batteriegrad) wurde vorgelegt. In diesem Gemisch wurden 152 g/l LiPF₆ (Sigma, 99,995 %) gelöst, so dass sich eine Konzentration von 1 M des Lithiumsalzes ergab.

### Vergleichselektrolyt V2

Ein Gemisch aus 95 Gew.-% Propylencarbonat (UBE, Batteriegrad) und 5 Gew.-% Vinylcarbonat (UBE, Batteriegrad) wurde vorgelegt. In diesem Gemisch wurden 152 g/l LiPF₆ (Sigma, 99,995 %) gelöst, so dass sich eine Konzentration von 1 M des Lithiumsalzes ergab.

Es wurden Zellen in einer 3-Elektroden-Anordnung mit den erfindungsgemäßen Elektrolytlösungen A2 und B2 und dem Vergleichselektrolyten V2 hergestellt, wobei als negative Elektrode eine Graphitelektrode und als positive Elektrode eine Lithium-Nickel-Cobalt-Mangan-Oxid (NCM)-Elektrode und als Referenzelektrode metallisches Lithium verwendet wurde. Da der irreversible Kapazitätsverlust nicht nur von dem verwendeten Elektrolyten sondern auch von der Graphitanode beeinflusst wird, wurden Elektroden aus einer Charge verwendet, so dass der Einfluss der Anode vernachlässigt werden kann.

Untersucht wurde der erste Lade- und der erste Entladeprozess zwischen 0,025 V und 1,5 V bei einer C-Rate von 0,2 C einer Batterie zur Bestimmung der Höhe der Kapazität nach dem Entladen im Vergleich zur Anfangskapazität. Das erstmalige Laden und Entladen einer Zelle wird auch als Formierung oder erster Zyklus bezeichnet.

Der irreversible Kapazitätsverlust des Vergleichselektrolyten V2 lag bei 495 mAh g⁻¹ und die resultierende Effizienz lag lediglich noch bei 33,6 % der Anfangskapazität. Demgegenüber lag der irreversible Kapazitätsverlust des erfindungsgemäßen Elektrolyten A2 enthaltend 5 Gew.-% Fluoraceton bei 161 mAh g⁻¹ und die Effizienz betrug noch 53 % der Anfangskapazität. Bei Verwendung des erfindungsgemäßen Elektrolyten B2 enthaltend 1 Gew.-% Fluoraceton und 1 Gew.-% Vinylcarbonat lag der irreversible Kapazitätsverlust bei 117 mAh g⁻¹ und die Effizienz betrug noch 75,5 % der Anfangskapazität, wie in Figur 1 gezeigt ist.

Es konnte festgestellt werden, dass die Verwendung von 5 Gew.-% Fluoraceton im erfindungsgemäßen Elektrolyten A2 die Effizienz des ersten Zyklus deutlich verbessert bzw. der irreversible Kapazitätsverlust deutlich verringert wurde. Eine weitere Verbesserung konnte durch Verwendung des erfindungsgemäßen Elektrolyten B2 enthaltend 1 Gew.-% Fluoraceton und 1 Gew.-% Vinylcarbonat erreicht werden.

### Beispiel 3

### Untersuchung der Zyklisierungen

Untersucht wurde der Kapazitätsverlust über die Zyklenzahl. Es wurden die gleichen Zellen mit den erfindungsgemäßen Elektrolytlösungen A2 und B2 und dem Vergleichselektrolyten V2 wie unter Beispiel 2 beschrieben verwendet.

Zunächst wurden die Zellen über drei Zyklen bei einer C-Rate von 0,2C zwischen 0,025 V und 1,5 V formiert. Aus dem ersten Zyklus dieser Formierung wurde die irreversible Kapazität (wie in Beispiel 2 beschrieben) sowie die Effizienz bestimmt. Anschließend wurden alle Zellen bei einer C-Rate von 1C zwischen 0,025 V und 1,5 V zyklisiert. Auf den Entladeschritt folgte in jedem Zyklus ein "constant Voltage" Schritt, bei dem das Potential eine Stunde lang bei 0,025 V gehalten wurde. Anschließend wurde die Zelle wieder geladen. Diese drei Schritte wurden für den Vergleichselektrolyten V2 150mal, für die Elektrolyte A2 und B2 jeweils 200mal durchgeführt. Diese Versuche wurden bei Raumtemperatur (20°C) an einem Zellteststand der Firma Maccor durchgeführt.

Es konnte festgestellt werden, dass bei Verwendung des Vergleichselektrolyten V2 nach 100 Zyklen noch 96 % und nach 150 Zyklen noch 93,6 % der Ausgangskapazität vorhanden waren. Bei Verwendung des erfindungsgemäßen Elektrolyten A2 war nach 100 Zyklen noch 94 %, nach 150 Zyklen noch 91% der Kapazität vorhanden, während bei Verwendung des erfindungsgemäßen Elektrolyten B2 nach 100 Zyklen noch 98,8 % und nach 200 Zyklen noch 98,3 % der Kapazität vorhanden waren. Insbesondere eine Verwendung von Fluoraceton und Vinylcarbonat konnte eine deutliche Verbesserung bewirken.

### Beispiel 4

### Zyklische Voltametrie

Die zyklischen Voltametrien wurden mit einer Halbzelle (3-Elektrodenzelle, Swagelok®-Grundkörper) bei Raumtemperatur (20°C) an einem Potentiostat der Firma BioLogic (Typ VSP) gemessen. Hierzu wurde jeweils eine Graphitelektrode (alle aus einer Charge) als Arbeitselektrode (T44, Timcal), und Lithium als Gegen- und Referenzelektrode (Chemetall, Batteriegrad) verwendet. Als Elektrolyte wurden die erfindungsgemäßen Elektrolytlösungen A2 und B2 und der Vergleichselektrolyt V2 wie unter Beispiel 2 beschrieben verwendet. Das Startpotential wurde bis zu einem Potential von 0,025 V potentialdynamisch reduziert und von diesem Potential ausgehend wurde das Potential auf 1,5 V erhöht. Dieser Prozess wurde dreimal wiederholt (zyklisch).

Bei der Reduktion des Potentials findet ab einem Potential von ca. 0,25 V eine Interkalation des Lithiums in die Graphitschichten statt. Findet dieser Prozess in Standard-Elektrolyten wie Ethylencarbonat/Diethylcarbonat statt, so lassen sich im Zyklovoltamogramm mehrere Interkalationsstufen erkennen. Reduziert man demgegenüber das Potential von Zellen in denen Propylencarbonat als Elektrolyt ohne Additive verwendet wurde, so wird das Propylencarbonat in die Graphitschichten cointerkaliert und zerstört den Graphit irreversibel.

Wie in Figur 2 gezeigt ist, ließ sich bei Verwendung von Propylencarbonat kein Zyklovoltamogramm erstellen. Dies erklärt sich dadurch, dass die Graphit-typische Schichtstruktur bereits bei der ersten Interkalation vollständig zerstört wurde.

Demgegenüber enthielten die erfindungsgemäßen Elektrolytlösungen A2 und B2 neben Propylencarbonat 5 Gew.-% Fluoraceton bzw. 1 Gew.-% Fluoraceton und 1 Gew.-% Vinylcarbonat. Wie anhand von Figur 2 gezeigt ist, ließ sich durch die Verwendung von Fluoraceton eine Cointerkalation des Propylencarbonats verhindern und eine zyklische Voltametrie durchführen.

In dem in Figur 3 dargestellten Zyklovoltamogramm ist neben den unterschiedlichen Interkalationsstufen des Graphits auch das Zersetzungspotenzial von Fluoraceton und Vinylcarbonat erkennbar. So zersetzte sich das Vinylcarbonat ab einem Potential von 1 V und erreicht seinen Scheitelpunkt bei ca. 0,65 V. Die Zersetzung des Fluoracetons begann bereits bei einem Potential von 1,8 V und erreichte seinen Scheitelpunkt bei 1,48 V.

Betrachtet man die Zersetzung des Gemisches von Propylencarbonat mit 1 Gew.-% Fluoraceton und 1 Gew.-% Vinylcarbonat der erfindungsgemäßen Elektrolytlösung B2, so fällt auf, dass die Zersetzung etwas später bei 1,7 V begann, ihren Scheitelpunkt aber ebenfalls bei 1,48 V erreichte. Es wurde festgestellt, dass bei einem Gemisch von 1 Gew.-% Vinylcarbonat (VC) und 1 Gew.-% Fluoraceton (FA) kein Peak des Vinylcarbonats zu sehen war. Dies lässt darauf schließen, dass die Zersetzung des Vinylcarbonats gleichzeitig mit der Zersetzung des Fluoracetons einherging. Ohne auf eine bestimmte Theorie festgelegt zu sein, wird angenommen, dass die Zersetzung des Fluoracetons die gleichzeitige Zersetzungsreaktion des Vinylcarbonats induzierte. Insbesondere ist erkennbar, dass die Zersetzung des Vinylcarbonats ausschließlich im ersten Zyklus stattfand.

Es konnte festgestellt werden, dass Fluoraceton und Vinylcarbonat eine stabile SEI ausbilden können, die über die gesamte Zyklisierdauer den Graphit vor Exfoliation schützten kann. Von Vorteil ist insbesondere, dass wenn die Zersetzung deutlich vor dem Interkalationspotential stattfindet, eine stabile SEI gebildet werden kann, bevor Lithium interkaliert wird. Somit beeinflussen sich die beiden Prozesse nicht gegenseitig.

Die frühe Zersetzung des Fluoraceton und die damit einhergehende Ausbildung der SEI zeigt somit einen deutlichen Vorteil gegenüber der Verwendung von Vinylcarbonat.

### Beispiel 5

### Bestimmung der Kapazität und Zyklisierung von 1,3-Difluoraceton

Die Bestimmung der irreversiblen Kapazität im ersten Zyklus sowie der Kapazitätsverlust über die Zyklenzahl für 1,3-Difluoraceton erfolgten dabei wie unter Beispiel 2 und 3 beschrieben, wobei folgende erfindungsgemäße Elektrolyte verwendet wurden:

| | |
|---|---|
| Elektrolyt C1: | Eine 1 M Lösung von LiPF₆ in einem Gemisch von 98 Gew.-% Propylencarbonat (PC) und jeweils 1 Gew.-% 1,3-Difluoraceton (DFA) und Vinylcarbonat (VC). |
| Elektrolyt C2: | Eine 1 M Lösung von LiPF₆ in einem Gemisch von 99 Gew.-% Propylencarbonat und jeweils 0,5 Gew.-% 1,3-Difluoraceton und Vinylcarbonat. |
| Elektrolyt C3: | Eine 1 M Lösung von LiPF₆ in einem Gemisch von 95 Gew.-% Propylencarbonat und 5 Gew.-% 1,3-Difluoraceton. |

Hierzu wurde jeweils ein Gemisch aus Propylencarbonat (UBE, Batteriegrad), 1,3-Difluoraceton (ABCR, 99 %) und ggf. Vinylcarbonat (UBE, Batteriegrad) vorgelegt. In diesem Gemisch wurden 152 g/l LiPF₆ (Sigma, 99,995 %) gelöst, so dass sich eine Konzentration von 1 M des Lithiumsalzes ergab. Es wurden 500 Lade-/Entladezyklen durchgeführt.

Wie anhand von Figur 4 gezeigt ist, ließ sich durch die Verwendung von 1,3-Difluoraceton in den erfindungsgemäßen Elektrolytlösungen C1, C2 und C3 eine Cointerkalation des Propylencarbonats verhindern und eine zyklische Voltametrie durchführen. Demgegenüber ließ sich bei Verwendung von Propylencarbonat kein Zyklovoltamogramm erstellen. Dies erklärt sich dadurch, dass die Graphit-typische Schichtstruktur bereits bei der ersten Interkalation vollständig zerstört wurde.

In dem in Figur 4 dargestellten Zyklovoltamogramm ist neben der Interkalation von Lithium in den Graphit auch das Zersetzungspotenzial von 1,3-Difluoraceton zu erkennen. Die Zersetzung des 1,3-Difluoraceton begann bereits bei einem Potential von 2 V und erreichte für den erfindungsgemäßen Elektrolyten C3 enthaltend 0,5 Gew.-% 1,3-Difluoraceton seinen Scheitelpunkt bei 1,63 V. Die Zersetzung des Gemisches von Propylencarbonat mit 1 Gew.-% 1,3-Difluoraceton und 1 Gew.-% Vinylcarbonat der erfindungsgemäßen Elektrolytlösung C1 erreichte ihren Scheitelpunkt bei 1,57 V. Ferner wurde festgestellt, dass bei einem Gemisch von 1 Gew.-% Vinylcarbonat (VC) und 1 Gew.-% 1,3-Difluoraceton kein Peak des Vinylcarbonats zu sehen war, wie der Figur 4 entnommen werden kann. Dies lässt darauf schließen, dass die Zersetzung des Vinylcarbonats gleichzeitig mit der Zersetzung des 1,3-Difluoraceton einherging. Ein ähnliches Verhalten zeigte sich für den erfindungsgemäßen Elektrolyten C2. Bei einem geringeren Anteil von 0,5 Gew.-% 1,3-Difluoraceton und 0,5 Gew.-% Vinylcarbonat war der Scheitelpunkt der Zersetzung mit 1,52 V weiter zu kleineren Potentialen verschoben. Die Zersetzung begann für die erfindungsgemäßen Elektrolyte C1, C2 und C3 nahezu bei gleichen Potentialen.

Ohne auf eine bestimmte Theorie festgelegt zu sein, wird angenommen, dass die Zersetzung des 1,3-Difluoraceton ähnlich wie bei Fluoraceton die gleichzeitige Zersetzungsreaktion des Vinylcarbonats induzierte. Insbesondere ist erkennbar, dass die Zersetzung des Vinylcarbonats ausschließlich im ersten Zyklus stattfand.

Untersucht wurde ferner der erste Lade- und der erste Entladeprozess zwischen 0,025 V und 1,5 V bei einer C-Rate von 0,2 C einer Batterie zur Bestimmung der Höhe der Kapazität nach dem Entladen im Vergleich zur Anfangskapazität.

Wie in der Figur 5 gezeigt ist, lag der irreversible Kapazitätsverlust des erfindungsgemäßen Elektrolyten C1 bei 160 mAh g⁻¹ und die resultierende Effizienz bei 52 % der Anfangskapazität. Der irreversible Kapazitätsverlust des erfindungsgemäßen Elektrolyten C2 enthaltend 0,5 Gew.-% Fluoraceton und 0,5 .-% Vinylcarbonat lag bei 155 mAh g⁻¹ und die Effizienz betrug noch 60 % der Anfangskapazität,. Der irreversible Kapazitätsverlust des Vergleichselektrolyten V2 lag hingegen bei 495 mAh g⁻¹ und die resultierende Effizienz lag lediglich noch bei 33,6 % der Anfangskapazität.

Somit konnte festgestellt werden, dass die Verwendung von 0,5 Gew.-% 1,3-Difluoraceton und 0,5 Gew.-% Vinylcarbonat bzw. 1 Gew.-% 1,3-Difluoraceton und 1 Gew.-% Vinylcarbonat die Effizienz des ersten Zyklus deutlich verbesserte bzw. der irreversible Kapazitätsverlust deutlich verringert wurde.

Insgesamt konnte festgestellt werden, dass 1,3-Difluoraceton und Vinylcarbonat eine stabile SEI ausbilden können, die über die gesamte Zyklisierdauer den Graphit vor Exfoliation schützen kann. Von Vorteil ist insbesondere, dass wenn die Zersetzung deutlich vor dem Interkalationspotential stattfindet, eine stabile SEI gebildet werden kann, bevor Lithium interkaliert wird. Somit beeinflussen sich die beiden Prozesse nicht gegenseitig.

Die frühe Zersetzung des Fluoracetons und die damit einhergehende Ausbildung der SEI zeigt somit einen deutlichen Vorteil gegenüber der Verwendung von Vinylcarbonat.

## Patentansprüche

1. Elektrolyt, umfassend wenigstens ein Lithiumsalz, ein Lösungsmittel und wenigstens eine Verbindung gemäß der allgemeinen Formel (1) wie nachstehend angegeben 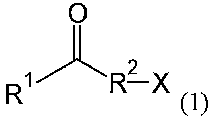 worin:
X ist ausgewählt aus der Gruppe umfassend F, Cl, Br und/oder I;
R¹ ist ausgewählt aus der Gruppe umfassend H, CH₃, CH₂F, CHF₂, CF₃, C₂H₅, C₂H₄F, C₂H₃F₂, C₂H₂F₃ und/oder C₂HF₄;
R² ist eine Gruppe -CR³R⁴-, worin:
R³ ist ausgewählt aus der Gruppe umfassend H, CH₃, CH₂F, CHF₂ und/oder CF₃, und
R⁴ ist ausgewählt aus der Gruppe umfassend H, F, CH₃, CH₂F und/oder CHF₂.

2. Elektrolyt nach Anspruch 1, **dadurch gekennzeichnet, dass**
X ist F;
R¹ ist ausgewählt aus der Gruppe umfassend H, CH₃, CH₂F, CHF₂, CF₃, C₂H₅, C₂H₄F, C₂H₃F₂, C₂H₂F₃ und/oder C₂HF₄;
R² ist eine Gruppe -CR³R⁴-, worin:
R³ ist Wasserstoff, und
R⁴ ist ausgewählt aus der Gruppe umfassend H, F, CH₃, CH₂F und/oder CHF₂.

3. Elektrolyt nach Anspruch 1 oder 2, **dadurch gekennzeichnet, dass** R¹ ausgewählt ist aus der Gruppe umfassend CH₃, CH₂F, CHF₂ und/oder CF₃.

4. Elektrolyt nach einem der vorherigen Ansprüche, **dadurch gekennzeichnet, dass** die Verbindung gemäß der allgemeinen Formel (1) ausgewählt ist aus der Gruppe umfassend CF₃-C(O)-CHF₂, CF₃-C(O)-CH₂F, CHF₂-C(O)-CHF₂, CF₃-C(O)-CH₃, CH₂F-C(O)-CHF₂, CHF₂-C(O)-CH₃, CH₂F-C(O)-CH₂F und/oder CH₂F-C(O)-CH₃.

5. Elektrolyt nach einem der vorherigen Ansprüche, **dadurch gekennzeichnet, dass** das Lösungsmittel ein aprotisches Lösungsmittel, eine ionische Flüssigkeit und/oder ein Polymerelektrolyt ist.

6. Elektrolyt nach Anspruch 5, **dadurch gekennzeichnet, dass** das aprotische Lösungsmittel ausgewählt ist aus der Gruppe umfassend Propylencarbonat, Ethylencarbonat, Diethylcarbonat, Dimethylcarbonat, Ethylmethylcarbonat, Acetonitril, Glutaronitril, Adiponitril, Pimelonitril, gamma-Butyrolacton und/oder gamma-Valerolacton.

7. Elektrolyt nach Anspruch 5, **dadurch gekennzeichnet, dass** die ionische Flüssigkeit ausgewählt ist aus der Gruppe umfassend N-butyl-N-methylpyrrolidinium bis(trifluoromethansulfonyl)imid und/oder N-methyl-N-propylpyrrolidinium bis(trifluoromethanesulfonyl)imid.

8. Elektrolyt nach Anspruch 5, **dadurch gekennzeichnet, dass** der Polymerelektrolyt ausgewählt ist aus der Gruppe umfassend Polyethylenoxid, Polyacrylnitril und/oder Polymethylmethacrylat.

9. Elektrolyt nach einem der vorherigen Ansprüche, **dadurch gekennzeichnet, dass** ein Gemisch des Lösungsmittels und der wenigstens einen Verbindung gemäß der allgemeinen Formeln (1) im Bereich von ≥ 0,1 Gew.-% bis ≤ 15 Gew.-%, bezogen auf das Gesamtgewicht des Gemischs, der wenigstens einen Verbindung gemäß der allgemeinen Formeln (1) enthält.

10. Elektrolyt nach einem der vorherigen Ansprüche, **dadurch gekennzeichnet, dass** das Lithiumsalz ausgewählt ist aus der Gruppe umfassend LiPF₆, LiBF₄, LiAsF₆, LiSbF₆, LiClO₄, LiPtCl₆, LiN(SO₂CF₃)₂, LiC(SO₂CF₃)₃ und LiSO₃CF₃, Lithiumboratsalze, Lithium-Salze von Sulfonylimiden und/oder Lithium-tetrafluoro(oxalato)phosphat.

11. Elektrolyt nach Anspruch 10, **dadurch gekennzeichnet, dass** die Lithiumboratsalze ausgewählt sind aus Lithium-bisoxalatoborat, Lithium-difluorooxalatoborat Lithium-difluorooxalatoborat, Lithiumdifluoromalonatoborat, Lithium-difluoroglykolatoborat, Lithium-difluorosalicylatoborat, Lithium-difluorolactatoborat und/oder Lithium-difluorobrenzcatechinatoborat.

12. Elektrolyt nach Anspruch 10, **dadurch gekennzeichnet, dass** die Lithium-Salze von Sulfonylimiden Lithium-Salze von Bis(trifluormethansulfonyl)imid und Bis(pentafluor-ethansulfonyl)imid sind.

13. Lithium-basierter Energiespeicher umfassend einen Elektrolyten nach einem der vorstehenden Ansprüche.

14. Lithium-basierter Energiespeicher nach Anspruch 13, **dadurch gekennzeichnet, dass** der Lithium-basierte Energiespeicher eine Lithium-Batterie, Lithium-Ionen-Batterie, Lithium-Ionen-Akkumulator, Lithium-Polymer-Batterie oder ein Lithium-Ionen-Kondensator ist.

15. Verwendung einer Verbindung gemäß der allgemeinen Formel (1) wie nachstehend angegeben 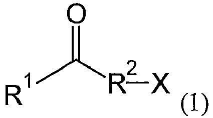 worin:
X ist ausgewählt aus der Gruppe umfassend F, Cl, Br und/oder I;
R¹ ist ausgewählt aus der Gruppe umfassend H, CH₃, CH₂F, CHF₂, CF₃, C₂H₅, C₂H₄F, C₂H₃F₂, C₂H₂F₃ und/oder C₂HF₄;
R² ist eine Gruppe -CR³R⁴-, worin:
R³ ist ausgewählt aus der Gruppe umfassend H, CH₃, CH₂F, CHF₂ und/oder CF₃, und
R⁴ ist ausgewählt aus der Gruppe umfassend H, F, CH₃, CH₂F und/oder CHF₂;
in Elektrolyten für primäre und sekundäre elektrochemische Lithium-basierte Energiespeicher.

## Claims

1. Electrolyte containing at least one lithium salt, one solvent and at least one compound of the following general formula (1) 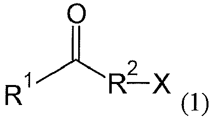 wherein:
X is selected from the group comprising F, Cl, Br and/or I;
R¹ is selected from the group comprising H, CH₃, CH₂F, CHF₂, CF₃, C₂H₅, C₂H₄F, C₂H₃F₂, C₂H₂F₃ and/or C₂HF₄;
R² is a -CR³R⁴- group, wherein:
R³ is selected from the group comprising H, CH₃, CH₂F, CHF₂ and/or CF₃, and
R⁴ is selected from the group comprising H, F, CH₃, CH₂F and/or CHF₂.

2. Electrolyte according to claim 1, **characterized in that**
X is F;
R¹ is selected from the group comprising H, CH₃, CH₂F, CHF₂, CF₃, C₂H₅, C₂H₄F, C₂H₃F₂, C₂H₂F₃ and/or C₂HF₄;
R² is a -CR³R⁴- group, wherein:
R³ is hydrogen, and
R⁴ is selected from the group comprising H, F, CH₃, CH₂F and/or CHF₂.

3. Electrolyte according to claim 1 or 2, **characterized in that** R¹ is selected from the group comprising CH₃, CH₂F, CHF₂ and/or CF₃.

4. Electrolyte according to any one of the foregoing claims, **characterized in that** the compound of general formula (1) is selected from the group comprising CF₃-C(O)-CHF₂, CF₃-C(O)-CH₂F, CHF₂-C(O)-CHF₂, CF₃-C(O)-CH₃, CH₂F-C(O)-CHF₂, CHF₂-C(O)-CH₃, CH₂F-C(O)-CH₂F and/or CH₂F-C(O)-CH₃.

5. Electrolyte according to any one of the foregoing claims, **characterized in that** the solvent is an aprotic solvent, an ionic liquid and/or a polymer electrolyte.

6. Electrolyte according to claim 5, **characterized in that** the aprotic solvent is selected from the group comprising propylene carbonate, ethylene carbonate, diethyl carbonate, dimethyl carbonate, ethyl methyl carbonate, acetonitrile, glutaronitrile, adiponitrile, pimelonitrile, gamma-butyrolactone and/or gamma-valerolactone.

7. Electrolyte according to claim 5, **characterized in that** the ionic liquid is selected from the group comprising N-butyl-N-methylpyrrolidinium bis(trifluoromethanesulfonyl)imide and/or N-methyl-N-propylpyrrolidinium bis(trifluoromethanesulfonyl)imide.

8. Electrolyte according to claim 5, **characterized in that** the polymer electrolyte is selected from the group comprising polyethyleneoxide, polyacrylonitrile and/or polymethylmethacrylate.

9. Electrolyte according to any one of the foregoing claims, **characterized in that** a mixture of the solvent and of the at least one compound of general formula (1) contains the at least one compound of general formula (1) in a range of ≥ 1.5 wt. % to ≤ 7 wt. %, based on the total weight of the mixture.

10. Electrolyte according to any one of the foregoing claims, **characterized in that** the lithium salt is selected from the group comprising LiPF₆, LiBF₄, LiAsF₆, LiSbF₆, LiClO₄, LiPtCl₆, LiN(SO₂CF₃)₂, LiC(SO₂CF₃)₃ and LiSO₃CF₃, lithium borate salts, lithium salts of sulfonyl imides and/or lithium tetrafluoro(oxalate)phosphate.

11. Electrolyte according to claim 10, **characterized in that** the lithium borate salts are selected from the group comprising lithium bisoxalatoborate, lithium difluorooxalatoborate lithium difluorooxalatoborate, lithium difluoromalonatoborate, lithium difluoroglycolatoborate, lithium difluorosalicylatoborate, lithium difluorolactatoborate and/or lithium difluoropyrocatecholoborate.

12. Electrolyte according to claim 10, **characterized in that** the lithium salts of sulfonyl imides are lithium salts of bis(trifluoromethanesulfonyl)imide and bis(pentafluoroethanesulfonyl)imide.

13. Lithium-based energy storage means, comprising an electrolyte according to any one of the foregoing claims.

14. Lithium-based energy storage means according to claim 13, **characterized in that** the lithium-based energy storage means is a lithium battery, lithium-ion battery, lithium-ion accumulator, lithium polymer battery or a lithium-ion capacitor.

15. Use of a compound of the following general formula (1) 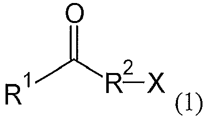 wherein:
X is selected from the group comprising F, Cl, Br and/or I;
R¹ is selected from the group comprising H, CH₃, CH₂F, CHF₂, CF₃, C₂H₅, C₂H₄F, C₂H₃F₂, C₂H₂F₃ and/or C₂HF₄;
R² is a -CR³R⁴- group, wherein:
R³ is selected from the group comprising H, CH₃, CH₂F, CHF₂ and/or CF₃, and
R⁴ is selected from the group comprising H, F, CH₃, CH₂F and/or CHF₂;
in electrolytes for primary and secondary electrochemical lithium-based energy storage means.

## Revendications

1. Électrolyte, comprenant au moins un sel de lithium, un solvant et au moins un composé selon la formule générale (1), telle qu'indiquée ci-après : 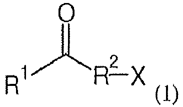 dans laquelle :
X est choisi dans le groupe comprenant F, Cl, Br et/ou I ;
R¹ est choisi dans le groupe comprenant H, CH₃, CH₂F, CHF₂, CF₃, C₂H₅, C₂H₄F, C₂H₃F₂, C₂H₂F₃ et/ou C₂HF₄ ;
R² est un groupe -CR³R⁴-, dans lequel :
R³ est choisi dans le groupe comprenant H, CH₃, CH₂F, CHF₂ et/ou CF₃, et
R⁴ est choisi dans le groupe comprenant H, F, CH₃, CH₂F et/ou CHF₂.

2. Électrolyte selon la revendication 1, **caractérisé en ce que**
X représente F ;
R¹ est choisi dans le groupe comprenant H, CH₃, CH₂F, CHF₂, CF₃, C₂H₅, C₂H₄F, C₂H₃F₂, C₂H₂F₃ et/ou C₂HF₄ ;
R² est un groupe -CR³R⁴-, dans lequel :
R³ représente hydrogène, et
R⁴ est choisi dans le groupe comprenant H, F, CH₃, CH₂F et/ou CHF₂.

3. Électrolyte selon la revendication 1 ou 2, **caractérisé en ce que** R¹ est choisi dans le groupe comprenant CH₃, CH₂F, CHF₂ et/ou CF₃.

4. Électrolyte selon l'une quelconque des revendications précédentes, **caractérisé en ce que** le composé selon la formule générale (1) est choisi dans le groupe comprenant CF₃-C(O)-CHF₂, CF₃-C(O)-CH₂F, CHF₂-C(O)-CHF₂, CF₃-C(O)-CH₃, CH₂F-C(O)-CHF₂, CHF₂-C(O)-CH₃, CH₂F-C(O)-CH₂F et/ou CH₂F-C(O)-CH₃.

5. Électrolyte selon l'une quelconque des revendications précédentes, **caractérisé en ce que** le solvant est un solvant aprotique, un liquide ionique et/ou un électrolyte polymère.

6. Électrolyte selon la revendication 5, **caractérisé en ce que** le solvant aprotique est choisi dans le groupe comprenant le carbonate de propylène, le carbonate d'éthylène, le carbonate de diéthyle, le carbonate de diméthyle, le carbonate d'éthylméthyle, l'acétonitrile, le glutaronitrile, l'adiponitrile, le pimélonitrile, la gamma-butyrolactone et/ou la gamma-valérolactone.

7. Électrolyte selon la revendication 5, **caractérisé en ce que** le liquide ionique est choisi dans le groupe comprenant le bis(trifluorométane-sulfonyl)imide de N-butyl-N-méthylpyrrolidinium et/ou le bis(trifluorométhane-sulfonyl)imide de N-méthyl-N-propylpyrrolidinium.

8. Électrolyte selon la revendication 5, **caractérisé en ce que** l'électrolyte polymère est choisi dans le groupe comprenant le polyoxyde d'éthylène, le polyacrylonitrile et/ou le polyméthacrylate de méthyle.

9. Électrolyte selon l'une quelconque des revendications précédentes, **caractérisé en ce qu'**un mélange du solvant et dudit au moins un composé selon la formule générale (1) contient dans la plage allant de ≥ 0,1 % en poids à ≤ 15 % en poids, par rapport au poids total du mélange, dudit au moins un composé selon la formule générale (1).

10. Électrolyte selon l'une quelconque des revendications précédentes, **caractérisé en ce que** le sel de lithium est choisi dans le groupe comprenant LiPF₆, LiBF₄, LiAsF₆, LiSbF₆, LiClO₄, LiPtCl₆, LiN(SO₂CF₃)₂, LiC(SO₂CF₃)₃ et LiSO₃CF₃, les sels de borate de lithium, les sels de lithium de sulfonylimides et/ou le tétrafluoro(oxalato)phosphate de lithium.

11. Électrolyte selon la revendication 10, **caractérisé en ce que** les sels de borate de lithium sont choisis parmi le bisoxalatoborate de lithium, le difluorooxalatoborate de lithium, le difluorooxalatoborate de lithium, le difluoromalonatoborate de lithium, le difluoroglycolatoborate de lithium, le difluorosalicylatoborate de lithium, le difluorolactatoborate de lithium et/ou le difluoro-brenzcatéchinatoborate de lithium.

12. Électrolyte selon la revendication 10, **caractérisé en ce que** les sels de lithium de sulfonylimides sont les sels de lithium de bis(trifluorométhane-sulfonyl)imide et de bis(pentafluoroéthane-sulfonyl)imide.

13. Réservoir d'énergie à base de lithium comprenant un électrolyte selon l'une quelconque des revendications précédentes.

14. Réservoir d'énergie à base de lithium selon la revendication 13, **caractérisé en ce que** le réservoir d'énergie à base de lithium est une batterie au lithium, une batterium lithium-ion, un accumulateur lithium-ion, une batterie lithium-polymère ou un condensateur lithium-ion.

15. Utilisation d'un composé selon la formule générale (1), telle qu'indiquée ci-après : 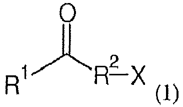 dans laquelle :
X est choisi dans le groupe comprenant F, Cl, Br et/ou I ;
R¹ est choisi dans le groupe comprenant H, CH₃, CH₂F, CHF₂, CF₃, C₂H₅, C₂H₄F, C₂H₃F₂, C₂H₂F₃ et/ou C₂HF₄ ;
R² est un groupe -CR³R⁴-, dans lequel :
R³ est choisi dans le groupe comprenant H, CH₃, CH₂F, CHF₂ et/ou CF₃, et
R⁴ est choisi dans le groupe comprenant H, F, CH₃, CH₂F et/ou CHF₂ ;
dans des électrolytes pour des réservoirs d'énergie à base de lithium électrochimiques primaires et secondaires.
